Europäisches Patentamt

European Patent Office

Office européen des brevets

(11) Veröffentlichungsnummer: **0 206 139**
**B1**

(12) **EUROPÄISCHE PATENTSCHRIFT**

(45) Veröffentlichungstag der Patentschrift: **16.01.91**

(21) Anmeldenummer: **86108016.6**

(22) Anmeldetag: **12.06.86**

(51) Int. Cl.⁵: **G 01 D 3/08, G 01 D 11/00**

(54) **Fehlergesicherte inkrementale Positionsmesseinrichtung.**

(30) Priorität: **26.06.85 DE 3526735**

(43) Veröffentlichungstag der Anmeldung:
**30.12.86 Patentblatt 86/52**

(45) Bekanntmachung des Hinweises auf die
Patenterteilung:
**16.01.91 Patentblatt 91/03**

(84) Benannte Vertragsstaaten:
**AT CH DE FR GB IT LI NL SE**

(56) Entgegenhaltungen:
**EP-A-0 121 652**
**DE-A-2 020 393**
**DE-B-1 221 668**
**DE-B-1 905 392**
**DE-C-2 022 151**
**DE-C-2 207 224**
**GB-A-2 067 747**
**US-A-3 713 139**
**US-A-3 768 911**

(73) Patentinhaber: **DR. JOHANNES HEIDENHAIN
GMBH**
**Dr.-Johannes-Heidenhain-Strasse 5 Postfach
1260**
**D-8225 Traunreut (DE)**

(72) Erfinder: **Burkhardt, Horst, Dr.**
**Fraueneichweg 12**
**D-8221 Truchtlaching (DE)**

Courier Press, Leamington Spa, England.

**Beschreibung**

Die Erfindung betrifft eine fehlergesicherte inkrementale Positionsmeßeinrichtung gemäß dem Oberbegriff des Anspruchs 1.

Derartige Positionsmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Es sind bereits Einrichtungen zur Fehlersicherung bei inkrementalen Meßeinrichtungen bekannt geworden. Bei diesen werden in einen Übertragungsweg eingestreute Störimpulse unterdrückt, indem die zu übertragenden Signale als komplementäre Signale gleicher Phasenlage auf verschiedenen Kanälen einem logischen Netzwerk auf der Empfängerseite zugeführt werden. Über den Ausgang des logischen Netzwerkes werden nur dann Impulse abgegeben, wenn auf beiden Übertragungskanälen gleichzeitig zwei komplementäre Signale eintreffen (DE—AS 12 21 668).

Diese Einrichtung ist verhältnismäßig aufwendig aufgebaut, da für jedes zu übertragende Signal zwei Kanäle vorgesehen sein müssen.

In der DE—PS 20 22 151 ist eine Einrichtung zur Fehlervermeidung bei inkrementalen Meßeinrichtungen beschrieben, bei der direkt an wenigstens zwei Abtastsignalen eine Kontrolle des gegenseitigen Phasenwinkels und der Amplitudenhöhen durchgeführt wird. Die phasenversetzten Abtastsignale werden gleichzeitig einer Auswerteeinrichtung und einer Fehlerüberwachungseinheit zugeführt, in der die Abtastsignale gleichgerichtet werden und aus den gleichgerichteten Abtastsignalen ein Differenzsignal erzeugt wird, dem eine konstante Schwellenspannung überlagert ist. Beim Unterschreiten des Schwellenwertes spricht eine Kippschaltung auf das Vorzeichen der Differenz ihrer Eingangsspannungen, beispielsweise auf die Differenzspannung Null, an und löst die Fehlermeldung aus. Diese Einrichtung zur Fehlervermeidung ist aber nicht eigenfehlersicher aufgebaut.

Der DE—OS 20 20 393 entnimmt man eine Einrichtung zur Fehlersicherung bei inkrementalen Meßeinrichtungen, bei der ebenfalls direkt an wenigstens zwei Abtastsignalen eine Kontrolle des gegenseitigen Phasenwinkels und der Amplitudenhöhen durchgeführt wird. Jedes der zueinander phasenversetzten Abtastsignale wird einem Fenstertrigger mit jeweils zwei gleichen Triggerschwellen zugeführt. Die Ausgangssignale der beiden Fenstertrigger steuern eine aus einem Undgatter bestehende Kontrollschaltung an, die überprüft, ob die Schaltzustände der beiden Fenstertrigger zusammenfallen, die den Mittenbereichen der jeweiligen Abtastsignale zugeordnet sind, und gibt in diesem Fall eine Fehlermeldung ab. Diese Einrichtung zur Fehlersicherung ist aber gleichfalls nicht eigenfehlersicher aufgebaut.

Aus der DE—PS 22 07 224 ist eine fehlergesicherte inkrementale Positionsmeßeinrichtung bekannt, bei der eine Meßteilung von vier Abtastern einer Abtasteinrichtung zur Erzeugung von vier zueinander phasenversetzten Binärsignalen abgetastet wird; diese vier Abtaster bestehen jeweils aus einer Strichplatte mit einem zugeordneten Photoelement, die von einer Beleuchtungseinheit der Abtasteinrichtung beleuchtet werden. Ein logisches Netzwerk erzeugt mit bekannten logischen Schalt- und Verknüpfungselementen au seinem Ausgang ein Binärsignal, das gleich einem ausgewählten der vier Binärsignale der Abtaster ist, wenn an seinem Eingang eine erlaubte Kombination dieser Binärsignale bei fehlerfreiem Arbeiten der Abtaster anliegt, und das ungleich dem ausgewählten Binärsignal ist, wenn an seinem Eingang eine verbotene Kombination dieser Binärsignale bei fehlerhaftem Arbeiten der Abtaster anliegt. Das vom logischen Netzwerk erzeugte Binärsignal und das ausgewählte Binärsignal werden jeweils einem eigenen Zähler zugeführt, deren Zählergebnisse von einem Komparator verglichen werden, der von einer Taktfrequenz beaufschlagt ist. Bei einem Gleichstand der zu vergleichenden Zählergebnisse der beiden Zähler und bei einem einwandfreien Arbeiten des Komparators liegt an dessem Ausgang wiederum die Taktfrequenz vor, deren Vorhandensein das einwandfreie Arbeiten der gesamten Einrichtung anzeigt. Diese Taktfrequenz durchläuft vor dem Komparator nacheinander noch eine Reihe von Vergleichern, die zur Überwachung der Fehlerfreiheit der Schalt- und Verknüpfungselemente des logischen Netzwerkes jeweils Paare von Signalen dieser Elemente auf Gleichheit überprüfen. Diese ebenfalls aufwendige Einrichtung ist zwar eigenfehlersicher aufgebaut, benötigt aber zur Überwachung der Fehlersicherheit zwei Auswerteeinrichtungen mit jeweils einem eigenen Zähler. Darüberhinaus kann der Ausfall der gemeinsamen Beleuchtungseinheit für die vier Abtaster nicht immer anhand einer Fehlermeldung erkannt werden.

Der Erfindung liegt die Aufgabe zugrunde, eine inkrementale Positionsmeßeinrichtung der genannten Gattung anzugeben, die einfach aufgebaut ist und ein Erkennen sämtlicher praktisch auftretender Fehler ermöglicht.

Diese Aufgabe wird erfindungsgemäß durch die Merkmale des Anspruches 1 gelöst.

Die mit der Erfindung erzielten Vorteile bestehen insbesondere darin, daß durch die vorgeschlagenen Maßnahmen bei einer derartigen Positionsmeßeinrichtung mit einfachen Mitteln die Eigenfehlersicherheit und damit die Meßsicherheit wesentlich erhöht werden, da alle infolge des Ausfalls eines Elements der Meßeinrichtung auftretenden Fehler erkannt werden. Damit wird bei Bearbeitungsmaschinen und Meßmaschinen, an denen diese Positionsmeßeinrichtungen zum Einsatz gelangen, die Güte der hergestellten Werkstücke verbessert und der Ausschuß erheblich verringert; des weiteren wird durch die

# EP 0 206 139 B1

erhöhte Meßsicherheit die Betriebssicherheit der Maschine vergrößert und damit eine Gefährdung der Bedienungsperson praktisch ausgeschlossen.

Vorteilhafte Ausgestaltungen der Erfindung entnimmt man den abhängigen Ansprüchen.

Ein Ausführungsbeispiel der Erfindung wird anhand der Zeichnung näher erläutert.

Es zeigen

Figur 1 eine lichtelektrische inkrementale Längenmeßeinrichtung im Querschnitt;

Figur 2 einen Maßstab in der Draufsicht;

Figur 3 zwei Abtastplatten in der Draufsicht;

Figur 4 ein Signaldiagramm und

Figur 5 eine Fehlererkennungseinrichtung.

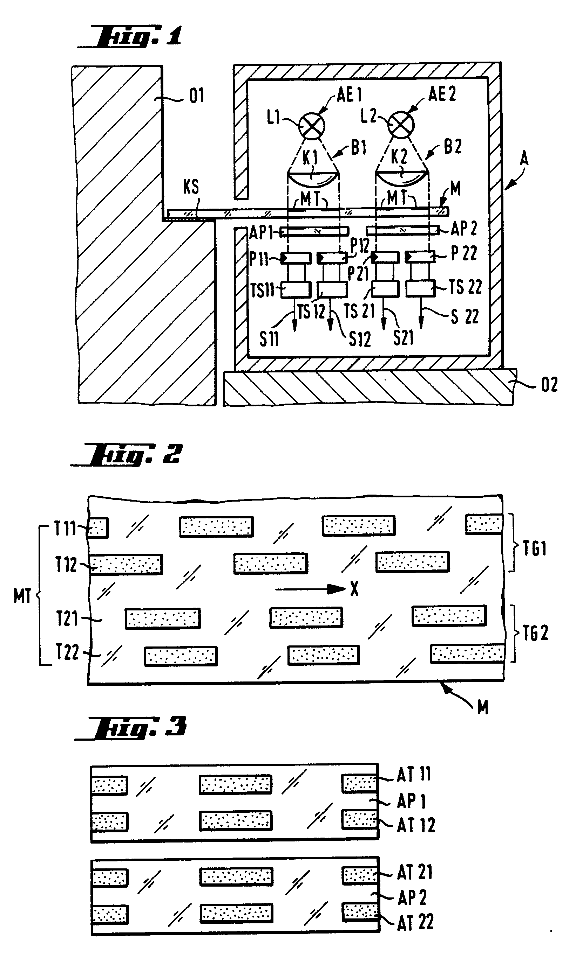

In Figur 1 ist eine lichtelektrische inkrementale Positionsmeßeinrichtung in Form einer Längenmeßeinrichtung im Querschnitt dargestellt, bei der ein Maßstab M mit einer Meßteilung MT mit einem ersten Objekt O1 mittels einer Klebeschicht KS verbunden ist. Zur Abtastung dieser Meßteilung MT des Maßstabs M ist eine Abtasteinrichtung A in beliebiger Weise mit einem zweiten Objekt O2 verbunden. Diese beiden zueinander verschieblichen Objekte O1, O2, deren gegenseitige Relativlage gemessen werden soll, werden beispielsweise durch Maschinenteile einer Bearbeitungsmaschine oder Meßmaschine gebildet.

Die Meßteilung MT des Maßstabs M besteht gemäß der Draufsicht in Figur 2 aus einer ersten Teilungsgruppe TG1 mit einer ersten Teilung T11 und einer zweiten Teilung T12 sowie aus einer zweiten Teilungsgruppe TG2 mit einer dritten Teilung T21 und einer vierten Teilung T22. Die Abtasteinrichtung A zur Abtastung der Meßteilung MT besitzt zur Abtastung der ersten Teilungsgruppe TG1 mit der ersten Teilung T11 und der zweiten Teilung T12 eine erste Abtasteinheit AE1 und zur Abtastung der zweiten Teilungsgruppe TG2 mit der dritten Teilung T21 und der vierten Teilung T22 eine zweite Abtasteinheit AE2.

Die in Figur 1 schematisch dargestellte erste Abtasteinheit AE1 weist eine erste Abtastplatte AP1 mit einer ersten Abtastteilung AT11 und einer zweiten Abtastteilung AT12 (Figur 3) sowie ein der ersten Abtastteilung AT11 zugeordnetes erstes Photoelement P11 und ein der zweiten Abtastteilung AT12 zugeordnetes zweites Photoelement P12 auf; zur Beleuchtung der ersten Teilungsgruppe TG1 mit der ersten Teilung T11 und der zweiten Teilung T12 der Meßteilung MT sowie der ersten Abtastteilung AT11 und der zweiten Abtastteilung AT12 der ersten Abtastplatte AP1 ist in der ersten Abtasteinheit AE1 eine erste Beleuchtungseinheit B1 in Form einer ersten Lichtquelle L1 und eines ersten Kondensors K1 vorgesehen. Die in Figur 1 ebenfalls schematisch dargestellte zweite Abtasteinheit AE2 weist eine zweite Abtastplatte AP2 mit einer dritten Abtastteilung AT21 und einer vierten Abtastteilung AT22 (Figur 3) sowie ein der dritten Abtastteilung AT21 zugeordnetes drittes Photoelement P21 und ein der vierten Abtastteilung AT22 zugeordnetes viertes Photoelement P22 auf; zur Beleuchtung der zweiten Teilungsgruppe TG2 mit der dritten Teilung T21 und der vierten Teilung T22 der Meßteilung MT sowie der dritten Abtastteilung AT21 und der vierten Abtastteilung AT22 der zweiten Abtastplatte AP2 ist in der zweiten Abtasteinheit AE2 eine zweite Beleuchtungseinheit B2 in Form einer zweiten Lichtquelle L2 und eines zweiten Kondensors K2 vorgesehen.

Gemäß Figur 2 bestehen die vier Teilungen T11, T12, T21, T22 der Meßteilung MT des Maßstabs M aus lichtundurchlässigen Feldern (gepunktete Felder) und aus lichtdurchlässigen Feldern (ungepunktete Felder), die abwechselnd aufeinander folgen, und besitzen die gleiche Teilungsperiode (Gitterkonstante). Gegenüber der ersten Teilung T11 der Meßteilung MT sind die zweite Teilung T12 um $3\pi/4$, die dritte Teilung T21 um $5\pi/4$ und die vierte Teilung T22 um $3\pi/2$ in Meßrichtung X versetzt (Teilungsperiode: $2\pi$). Nach Figur 3 sind die beiden Abtastteilungen AT11, AT12 der ersten Abtastplatte AP1 und die beiden Abtastteilungen AT21, AT22 der zweiten Abtastplatte AP2 mit den vier Teilungen T11, T12, T21, T22 der Meßteilung MT des Maßstabs M identisch, weisen jedoch keinen gegenseitigen Versatz in Meßrichtung X auf.

Der Lichtstrom der ersten Lichtquelle L1 der ersten Abtasteinheit AE1 durchsetzt über den ersten Kondensor K1 jeweils die erste Teilung T11 und die zweite Teilung T12 der ersten Teilungsgruppe TG1 der Meßteilung MT des Maßstabs M sowie jeweils die zugehörige erste Abtastteilung AT11 und die zugehörige zweite Abtastteilung AT12 der ersten Abtastplatte AP1 und fällt jeweils auf das zugehörige erste Photoelement P11 und das zugehörige zweite Photoelement P12 der ersten Abtasteinheit AE1. Gleichfalls durchsetzt der Lichtstrom der zweiten Lichtquelle L2 der zweiten Abtasteinheit AE2 über den zweiten Kondensor K2 jeweils die dritte Teilung T21 und die vierte Teilung T22 der zweiten Teilungsgruppe TG2 der Meßteilung MT des Maßstabs M sowie jeweils die zugehörige dritte Abtastteilung AT21 und die zugehörige vierte Abtastteilung AT22 der zweiten Abtastplatte AP2 und fällt jeweils auf das zugehörige dritte Photoelement P21 und das zugehörige vierte Photoelement P22 der zweiten Abtasteinheit AE2.

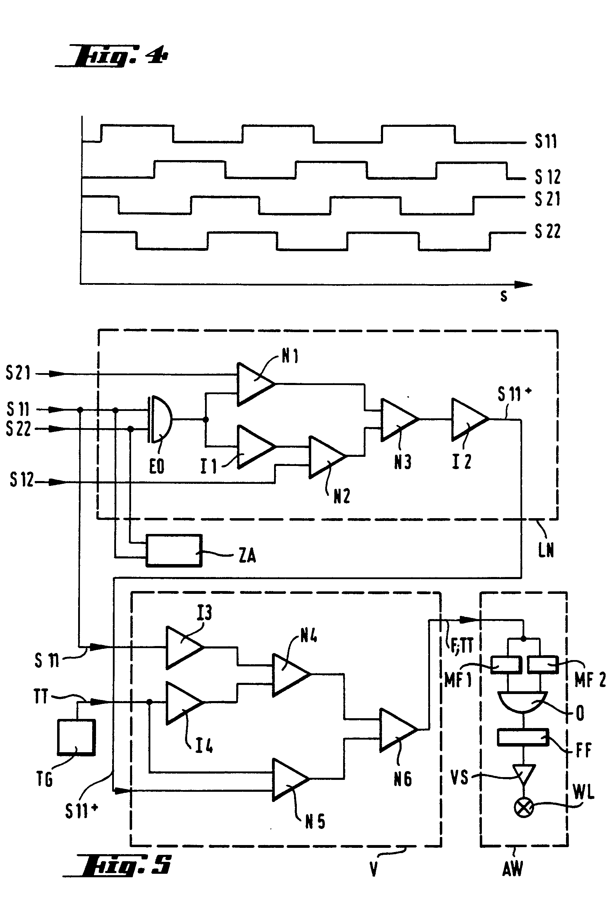

Bei der Bewegung der Abtasteinrichtung A mit den beiden Abtastplatten AP1, AP2 relativ zum Maßstab M in Meßrichtung X erzeugen die vier Photoelemente P11, P12, P21, P22 der beiden voneinander unabhängigen Abtasteinheiten AE1, AE2 aus den modulierten Lichtströmen der beiden Lichtquellen L1, L2 vier sinusförmige Abtastsignale, die vier jeweils zugehörigen Triggerstufen TS11, TS12, TS21, TS22 zur Umwandlung in vier rechteckförmige Binärsignale S11, S12, S21, S22 zugeführt werden, die in Figur 4 als Funktion des Meßweges s dargestellt sind. Die erste Triggerstufe TS11 und die zweite Triggerstufe TS12 sind in der ersten Abtasteinheit AE1 und die dritte Triggerstufe TS21 und die vierte Triggerstufe TS22 in der zweiten Abtasteinheit AE2 angeordnet. Wegen des oben erwähnten gegenseitigen Versatzes der vier

3

Teilungen T11, T12, T21, T22 sind gegenüber dem ersten Binärsignal S11 das zweite Binärsignal S12 um 135°, das dritte Binärsignal S21 um 225° und das vierte Binärsignal S22 um 270° in Meßrichtung X phasenversetzt.

In Figur 5 ist eine Fehlererkennungseinrichtung dargestellt, die aus einem logischen Netzwerk LN und aus einem nachgeschalteten Vergleicher V besteht. Das logische Netzwerk LN weist ein Antivalenzgatter EO (Exklusiv-Oder-Gatter), drei Nandgatter N1, N2, N3 sowie zwei Inverter I1, I2 auf. Das erste Binärsignal S11 der ersten Triggerstufe TS11 der ersten Abtasteinheit AE1 werden dem ersten Eingang und das vierte Binärsignal S22 der vierten Triggerstufe TS22 der zweiten Abtasteinheit AE2 dem zweiten Eingang des Antivalenzgatters EO zugeführt, dessen Ausgang einmal mit dem zweiten Eingang des ersten Nandgatters N1 und zum anderen über den ersten Inverter I1 mit dem zweiten Eingang des zweiten Nandgatters N2 verbunden ist; der erste Eingang des ersten Nandgatters N1 sind mit dem dritten Binärsignal S21 der dritten Triggerstufe TS21 der zweiten Abtasteinheit AE2 und der erste Eingang des zweiten Nandgatters N2 mit dem zweiten Binärsignal S12 der zweiten Triggerstufe TS12 der ersten Abtasteinheit AE1 beaufschlagt. Die beiden Ausgänge des ersten Nandgatters N1 und des zweiten Nandgatters N2 sind mit den beiden Eingängen des dritten Nandgatters N3 verbunden, dessen Ausgang den Eingang des zweiten Inverters I2 beaufschlagt. Am Ausgang des zweiten Inverters I2 steht ein verknüpftes Binärsignal $S11^+$ an, das im fehlerfreien Fall gleich dem ausgewählten ersten Binärsignal S11 der ersten Abtasteinheit AE1 ist; der fehlerfreie Fall liegt dann vor, wenn die beiden Abtasteinheiten AE1, AE2 und das logische Netzwerk LN einwandfrei arbeiten sowie keine Verschmutzung oder Beschädigung der Meßteilung MT vorliegen.

Das Erkennen des fehlerfreien Falles wird für die in Figur 4 angegebene Folge der vier Binärsignale S11, S12, S21, S22 dadurch erreicht, daß das logische Netzwerk LN nach der logischen Funktion

$$S11^+ = S12'S21' + S11'S12'S22' + S11'S21'S22 + S11S21'S22' + S11S12'S22$$
$$= S12'S21' + S12'(S11S22 + S11'S22') + S21'(S11S22' + S11'S22)$$

arbeitet. Hierbei wird die fehlersichere Ausführung des logischen Netzwerkes LN durch Ausklammern des invertierten zweiten Binärsignals S12' der ersten Abtasteinheit AE1 und des invertierten dritten Binärsignals S21' der zweiten Abtasteinheit AE2 erzielt.

Eine genaue Fehleranalyse zeigt, daß alle infolge des Ausfalles eines Elements der Meßeinrichtung auftretenden Fehler durch den Vergleich des verknüpften Binärsignals $S11^+$ des logischen Netzwerks LN mit dem ausgewählten ersten Binärsignal S11 der ersten Abtasteinheit AE1 erkannt werden. Als Fehler wird einer von folgenden Fällen verstanden:

a) Eines der vier Binärsignale S11, S12, S21, S22 der beiden Abtasteinheiten AE1, AE2 bleibt auch bei der Meßbewegung der Abtasteinrichtung A bezüglich der Meßteilung MT des Maßstabs M dauernd auf dem Signalpegel 0 oder 1, wobei dieser Fehler von einem fehlerhaften Arbeiten einer der beiden Abtasteinheiten AE1, AE2 oder von einer Verschmutzung oder Beschädigung der Meßteilung MT des Maßstabs M herrühren kann;

b) eines der drei Nandgatter N1—N3 oder der zwei Inverter I1 ,I2 oder das Antivalenzgatter EO liefern auch bei der Meßbewegung der Abtasteinrichtung A bezüglich der Meßteilung MT an seinem Ausgang dauernd den Wert 0 oder 1;

c) durch Ausfall der ersten Beleuchtungseinheit B1 besitzen das erste Binärsignal S11 und das zweite Binärsignal S12 und/oder durch Ausfall der zweiten Beleuchtungseinheit B2 das dritte Binärsignal S21 und das vierte Binärsignal S22 dauernd den Signalpegel 0.

In der nachfolgenden Tabelle sind die sechzehn theoretisch möglichen Kombinationen der Werte 0 und 1 der beiden Signalpegel der vier Binärsignale S11, S12, S21, S22 sowie die sich aus deren logischen Verknüpfungen im logischen Netzwerk LN ergebenden Werte für das verknüpfte Binärsignal $S11^+$ dargestellt.

| S11 | S12 | S21 | S22 | S11$^{+}$ | Z |
|---|---|---|---|---|---|
| 0 | 0 | 0 | 0 | 1 | u |
| 0 | 0 | 0 | 1 | 1 | u |
| 0 | 0 | 1 | 0 | 1 | u |
| 0 | 0 | 1 | 1 | 0 | e |
| 0 | 1 | 0 | 0 | 0 | e |
| 0 | 1 | 0 | 1 | 1 | u |
| 0 | 1 | 1 | 0 | 0 | e |
| 0 | 1 | 1 | 1 | 0 | e |
| 1 | 0 | 0 | 0 | 1 | e |
| 1 | 0 | 0 | 1 | 1 | e |
| 1 | 0 | 1 | 0 | 0 | u |
| 1 | 0 | 1 | 1 | 1 | e |
| 1 | 1 | 0 | 0 | 1 | e |
| 1 | 1 | 0 | 1 | 0 | u |
| 1 | 1 | 1 | 0 | 0 | u |
| 1 | 1 | 1 | 1 | 0 | u |

Die Spalte Z dieser Tabelle kennzeichnet die acht erlaubten Kombinationen e und die acht unerlaubten Kombinationen u von diesen sechzehn möglichen Kombinationen. Die acht erlaubten Kombinationen e treten bei der Folge der vier Binärsignale S11, S12, S21, S22 nach Figur 4 jeweils in den acht Abschnitten der Länge π/4 (45°) der vollen Teilungsperiode beispielsweise des ersten Binärsignals S11 auf. Die unerlaubten Kombinationen u treten bei der Folge der vier Binärsignale S11, S12, S21, S22 nach Figur 4 und damit auch im fehlerfreien Zustand nicht auf. Im fehlerfreien Fall treten somit nur die acht erlaubten Kombinationen e aus den vier Binärsignalen S11, S12, S21, S22 auf, die durch die Gleichheit zwischen dem ausgewählten ersten Binärsignal S11 und dem vom logischen Netzwerk LN erzeugten verknüpften Binärsignal S11$^{+}$ charakterisiert sind. Im fehlerhaften Fall treten die unerlaubten Kombinationen u der vier Binärsignale S11, S12, S21, S22 auf, die durch die Ungleichheit zwischen dem ausgewählten ersten Binärsignal S11 und dem vom logischen Netzwerk LN gelieferten verknüpften Binärsignal S11$^{+}$ charakterisiert sind.

Zur Feststellung der Gleichheit oder der Ungleichheit zwischen dem ersten Binärsignal S11 und dem verknüpften Binärsignal S11$^{+}$ werden das erste Binärsignal S11 und das verknüpfte Binärsignal S11$^{+}$ einem Vergleicher V zugeführt, der zusätzlich noch von einem periodischen Taktsignal TT eines Taktgenerators TG beaufschlagt wird. Das erste Binärsignal S11 wird über einen dritten Inverter I3 dem ersten Eingang und das periodische Taktsignal TT wird über einen vierten Inverter I4 dem zweiten Eingang eines vierten Nandgatters N4 zugeführt. Gleichzeitig beaufschlagen das periodische Taktsignal TT und das verknüpfte Binärsignal S11$^{+}$ die beiden Eingänge eines fünften Nandgatters N5. Die Ausgänge des vierten Nandgatters N4 und des fünften Nandgatters N5 sind mit den Eingängen eines sechsten Nandgatters N6 verbunden, an dessem Ausgang im fehlerfreien Fall das periodische Taktsignal TT und im fehlerhaften Fall ein unperiodisches Fehlersignal F anstehen; das unperiodische Fehlersignal F kann im fehlerhaften Fall die Werte 1 oder 0 annehmen. Dieser Vergleicher (V) ist eigenfehlersicher aufgebaut, so daß bei einem fehlerhaften Arbeiten des Vergleichers (V) ebenfalls das unperiodische Fehlersignal F erzeugt wird. Ein derartiger Vergleicher (V) ist beispielsweise in der DE—PS 22 07 224 beschrieben.

Das am Ausgang des Vergleichers V im fehlerfreien Fall anstehende periodische Taktsignal TT und das im fehlerhaften Fall anstehende unperiodische Fehlersignal F werden einer Auswerteeinheit AW mit zwei parallelen monostabilen Kippstufen MF1, MF2, einem Odergatter O, einer bistabilen Kippstufe FF, einem Verstärker VS sowie einer Warnlampe WL zugeleitet. Beim Anliegen des periodischen Taktsignals TT im fehlerfreien Fall an den beiden parallelen monostabilen Kippstufen MF1, MF2 der Auswerteeinheit AW mögen die erste monostabile Kippstufe MF1 von der ansteigenden Flanke des periodischen Taktsignals TT und die zweite monostabile Kippstufe MF2 von der abfallenden Flanke des periodischen Taktsignals TT aus dem stabilen Zustand in den instabilen Zustand versetzt werden. Die beiden monostabilen Kippstufen MF1, MF2 besitzen eine derartige Zeitkonstante, daß die Dauer dieser instabilen Zustände etwas größer als die Periodendauer des periodischen Taktsignals TT ist; diese Periodendauer ist der zeitliche Abstand zwischen je zwei ansteigenden Flanken oder zwischen je zwei abfallenden Flanken des periodischen Taktsignals TT. Im fehlerfreien Fall werden die beiden Kippstufen MF1, MF2 durch das periodische Taktsignal TT somit ständig in ihren instabilen Zuständen gehalten, so daß die bistabile Kippstufe FF nicht über das Odergatter O angesteuert wird, um über den Verstärker VS die Warnlampe WL zu betätigen. Beim Auftreten eines fehlerhaften Falls geht das periodische Taktsignal TT in das unperiodische Fehlersignal F mit den Zuständen 0 oder 1 über, so daß eine der beiden monostabilen Kippstufen MF1, MF2 aus dem instabilen Zustand in den stabilen Zustand umschaltet und damit die bistabile Kippstufe FF zur Betätigung der Warnlampe WL zur Anzeige dieses fehlerhaften Falls ansteuert.

Von den vier Binärsignalen S11, S12, S21, S22 können das erste Binärsignal S11 und das vierte Binärsignal S22 mit ihrem gegenseitigen Phasenversatz von −90° oder das zweite Binärsignal S12 und das dritte Binärsignal S21 mit ihrem gegenseitigen Phasenversatz von +90° einer Zähler- und Anzeigeeinheit ZA mit einem Richtungsdiskriminator zum vorzeichenrichtigen Zählen der Inkremente der Meßteilung MT des Maßstabs M bei der Abtastung durch die Abtasteinrichtung A mit den beiden voneinander unabhängigen Abtasteinheiten AE1, AE2 und zur digitalen Anzeige der Positionsmeßwerte für die Relativlage der beiden zueinander verschieblichen Objekte O1, O2 zugeführt werden.

Die sechs Nandgatter N1—N6 nach Figur 5 können auch durch Norgatter ersetzt werden.

In der nachfolgenden Tabelle sind Beispiele praktisch vorkommender Fehler der vier Binärsignale S11, S12, S21, S22 und das Erkennen dieser Fehler anhand der auftretenden unerlaubten Kombinationen u aufgeführt. Die jeweils vorkommenden fehlerhaften Werte der beiden Signalpegel der vier Binärsignale S11, S12, S21, S22 sind unterstrichen.

Wie der Vergleicher V ist auch das logische Netzwerk LN eigenfehlersicher aufgebaut.

| S11 | S12 | S21 | S22 |
|-----|-----|-----|-----|
| $\underline{0}$ | 0 | 0 | 1 |
| 0 | $\underline{0}$ | 0 | 0 |
| 0 | 1 | $\underline{0}$ | 1 |
| 0 | 0 | 1 | $\underline{0}$ |
| $\underline{1}$ | 1 | 1 | 0 |
| 1 | $\underline{1}$ | 1 | 1 |
| 1 | 0 | $\underline{1}$ | 0 |
| 1 | 1 | 0 | $\underline{1}$ |
| $\underline{0}$ | $\underline{0}$ | 0 | 1 |
| $\underline{0}$ | 1 | $\underline{0}$ | 1 |
| $\underline{0}$ | 0 | 1 | $\underline{0}$ |
| 0 | $\underline{0}$ | $\underline{0}$ | 0 |
| 0 | $\underline{0}$ | 0 | $\underline{0}$ |
| 0 | 0 | $\underline{0}$ | $\underline{0}$ |
| $\underline{1}$ | $\underline{1}$ | 1 | 0 |
| $\underline{1}$ | 0 | $\underline{1}$ | 0 |
| $\underline{1}$ | 1 | 0 | $\underline{1}$ |
| 1 | $\underline{1}$ | $\underline{1}$ | 1 |
| 1 | $\underline{1}$ | 1 | $\underline{1}$ |
| 1 | 1 | $\underline{1}$ | $\underline{1}$ |

# EP 0 206 139 B1

Die Erfindung ist nicht nur bei lichtelektrischen inkrementalen Längen- oder Winkelmeßeinrichtungen, sondern auch bei magnetischen, induktiven oder kapazitiven Längen- oder Winkelmeßeinrichtungen mit Erfolg einsetzbar.

**Patentansprüche**

1. Fehlergesicherte inkrementale Positionsmeßeinrichtung zur Messung der Relativlage zweier zueinander verschieblicher Objekte, bei der die Meßteilung einer mit dem ersten Objekt verbundenen Maßverkörperung von einer an dem zweiten Objekt befestigten Abtasteinrichtung zur Erzeugung zueinander phasenversetzter Binärsignale abgetastet wird, aus denen ein logisches Netzwerk ein Binärsignal erzeugt, das gleich einem ausgewählten dieser an seinem Eingang anliegenden Binärsignale bei einer erlaubten Kombination dieser Binärsignale und ungleich diesem ausgewählten Binärsignal bei einer verbotenen Kombination dieser Binärsignale ist, dadurch gekennzeichnet, daß die Abtasteinrichtung (A) einmal ein erstes Binärsignal (S11) und ein zweites Binärsignal (S12) mit einem gegenseitigen Phasenversatz von 135° und zum anderen ein drittes Binärsignal (S21) und ein viertes Binärsignal (S22) mit einem gegenseitigen Phasenversatz von 45° erzeugt, wobei zwischen dem zweiten Binärsignal (S12) und dem dritten Binärsignal (S21) ein gegenseitiger Phasenversatz von 90° besteht, und daß das vom logischen Netzwerk (LN) nach der logischen Gleichung $S11^+ = S12'S21' + S12'(S11S22 + S11'S22') + S21'(S11S22' + S11'S22)$ erzeugte verknüpfte Binärsignal $(S11^+)$ und das ausgewählte Binärsignal (S11) einem Vergleicher (V) zuführbar sind.

2. Meßeinrichtung nach Anspruch 1, dadurch gekennzeichnet, daß die Abtasteinrichtung (A) zwei voneinander unabhängige Abtasteinheiten (AE1, AE2) mit jeweils einer eigenen Beleuchtungseinheit (B1, B2) aufweist und daß die erste Abtasteinheit (AE1) das erste Binärsignal (S11) sowie das zweite Binärsignal (S12) und die zweite Abtasteinheit (AE2) das dritte Binärsignal (S21) sowie das vierte Binärsignal (S22) erzeugen.

3. Meßeinrichtung nach Anspruch 1, dadurch gekennzeichnet, daß die Binärsignale S11, S12, S21, S22 an den Eingängen des logischen Netzwerks (LN) anliegen und das verknüpfte Binärsignal $(S11^+)$ am Ausgang des logischen Netzwerks (LN) ansteht.

4. Meßeinrichtung nach Anspruch 3, dadurch gekennzeichnet, daß das erste Binärsignal (S11) und das vierte Binärsignal (S22) die Eingänge eines Antivalenzgatters EO beaufschlagen, dessen Ausgang einmal mit dem zweiten Eingang eines ersten Nandgatters (N1) und zum anderen über einen ersten Inverter (I1) mit dem zweiten Eingang eines zweiten Nandgatters (N2) verbunden ist, daß der erste Eingang des ersten Nandgatters (N1) vom dritten Binärsignal (S21) und der erste Eingang des zweiten Nandgatters (N2) vom zweiten Binärsignal (S12) beaufschlagt werden, daß die Ausgänge des ersten Nandgatters (N1) und des zweiten Nandgatters (N2) die Eingänge eines dritten Nandgatters (N3) beaufschlagen und daß der Ausgang des dritten Nandgatters (N3) mit dem Eingang eines zweiten Inverters (I2) verbunden ist, an dessen Ausgang des verknüpfte Binärsignal $(S11^+)$ ansteht.

5. Meßeinrichtung nach Anspruch 1, dadurch gekennzeichnet, daß der Vergleicher (V) neben den beiden Eingängen für das erste Binärsignal (S11) und das verknüpfte Binärsignal $(S11^+)$ noch einen dritten Eingang für ein periodisches Taktsignal (TT) eines Taktgenerators (TG) aufwewist und daß am Ausgang des Vergleichers (V) im fehlerfreien Fall das periodische Taktsignal (TT) und im fehlerhaften Fall ein unperiodisches Fehlersignal (F) anstehen.

6. Meßeinrichtung nach Anspruch 5, dadurch gekennzeichnet, daß das erste Binärsignal (S11) am ersten Eingang des Vergleichers (V) über einen dritten Inverter (I3) den ersten Eingang und das periodische Taktsignal (TT) am dritten Eingang des Vergleichers (V) über einen vierten Inverter (I4) den zweiten Eingang eines vierten Nandgatters (N4) beaufschlagen, daß das periodische Taktsignal (TT) zusätzlich den ersten Eingang und das verknüpfte Binärsignal $(S11^+)$ am zweiten Eingang des Vergleichers (V) den zweiten Eingang eines fünften Nandgatters (N5) beaufschlagen und daß die Ausgänge des vierten Nandgatters (N4) und des fünften Nandgatters (N5) mit den Eingängen eines sechsten Nandgatters (N6) verbunden sind, dessen Ausgang den Ausgang des Vergleichers (V) bildet.

7. Einrichtung nach Anspruch 1, dadurch gekennzeichnet, daß dem Vergleicher (V) eine Auswerteeinheit (AW) mit zwei parallelen monostabilen Kippstufen (MF1, MF2), einem Odergatter (O), einer bistabilen Kippstufe (FF), einem Verstärker (VS) und einer Warnlampe (WL) zur Erkennung des periodischen Taktsignals (TT) im fehlerfreien Fall und des unperiodischen Fehlersignals F im fehlerhaften Fall nachgeschaltet ist.

**Revendications**

1. Dispositif de mesure de position incrémental à sécurité anti-erreurs, pour mesurer la position relative de deux objets pouvant être déplacés l'un par rapport à l'autre, dans lequel la graduation d'une règle de mesure qui est fixée au premier objet est explorée par un dispositif d'exploration fixé au deuxième objet, pour produire des signaux binaires mutuellement déphasés, à partir desquels un circuit logique produit un signal binaire qui est égal à un signal sélectionné parmi les signaux binaires à son entrée, dans le cas d'une combinaison autorisée de ces signaux binaires, et qui est inégal à ce signal binaire sélectionné dans le cas d'une combinaison interdite des ces signaux binaires, caractérisé en ce que le dispositif

# EP 0 206 139 B1

d'exploration (A) produit, d'une part, un premier signal binaire (S11) et un deuxième signal binaire (S12) présentant un déphasage de 135° ete, d'autre part, un troisième signal binaire (S21) et un quatrième signal binaire (S22) présentant un déphasage mutuel de 45°, le deuxième signal binaire (S12) et le troisième signal binaire (S21) présentant entre eux un déphasage de 90°, et que le signal binaire combiné (S11$^+$), produit par le circuit logique (LN) d'après l'équation logique S11$^+$ = S12'S21' + S12'(S11S22 + S11'S22') + S21'(S11S22' + S11'S22), et le signal binaire (S11) sélectionné, peuvent être amenés à un comparateur (V).

2. Dispositif de mesure selon la revendication 1, caractérisé en ce que le dispositif d'exploration (A) comporte deux unités d'exploration (AE1, AE2) indépendantes pourvues chacune d'une propre unité d'éclairage (B1, B2) et que la première unité d'exploration (AE1) produit le premier signal binaire (S11) et le deuxième signal binaire (S12), et la deuxième unité d'exploration (AE2) produit le troisième signal binaire (S21) et le quatrième signal binaire (S22).

3. Dispositif de mesure selon la revendication 1, caractérisé en ce que les signaux binaires (S11, S12, S21 et S22) sont situés aux entrées du circuit logique (LN) et le signal binaire combiné (S11$^+$) est situé à la sortie dudit circuit logique (LN).

4. Dispositif de mesure selon la revendication 3, caractérisé en ce que le premier signal binaire (S11) et le quatrième signal binaire (S22) sont amenés aux entrées d'une porte OU exclusif (EO) dont la sortie est reliée à la deuxième entrée d'une première porte NON—ET (N1), d'une part, et à la deuxième entrée d'une deuxième porte NON—ET (N2) au moyen d'un premier inverseur (I1), d'autre part, que la première entrée de la première porte NON—ET (N1) reçoit le troisième signal binaire (S21) et la première entrée de la deuxième porte NON—ET (N2) reçoit le deuxième signal binaire (S12), que les sorties de la première porte NON—ET (N1) et de la deuxième porte NON—ET (N2) alimentent les entrées d'une troisième porte NON—ET (N3) et que la sortie de la troisième porte NON—ET (N3) est reliée à l'entrée d'un deuxième inverseur (I2) à la sortie duquel se trouve le signal binaire combiné (S11$^+$).

5. Dispositif de mesure selon la revendication 1, caractérisé en ce que le comparateur (V), outre les deux entrées destinées au premier signal binaire (S11) et au signal binaire combiné (S11$^+$), comporte aussi une troisième entrée pour un signal d'impulsions périodique (TT) d'un générateur d'impulsions (TG) et que la sortie du comparateur (V) émet le signal d'impulsions périodique (TT) lorsqu'il n'y a pas d'erreur et un signal d'erreur (F) non périodique lorsqu'il y a une erreur.

6. Dispositif de mesure selon la revendication 5, caractérisé en ce que le premier signal binaire (S11) situé à la première entrée du comparateur (V) est amené à la première entrée d'une quatrième porte NON—ET (N4) au moyen d'un troisième inverseur (I3) et le signal d'impulsions périodique (TT) situé à la troisième entrée du comparateur (V) est amené à la deuxième entrée de la quatrième porte NON—ET (N4) au moyen d'un quatrième inverseur (I4), que le signal d'impulsions périodique (TT) est amené en outre à la première entrée d'une cinquième porte NON—ET (N5) et le signal binaire combiné (S11$^+$) situé à la deuxième entrée du comparateur (V) est amené à la deuxième entrée de la cinquième porte NON—ET (N5) et que les sorties de la quatrième porte NON—ET (N4) et de la cinquième porte NON—ET (N5) sont reliées aux entrées d'une sixième porte NON—ET (N6) dont la sortie forme la sortie du comparateur (V).

7. Dispositif selon la revendication 1, caractérisé en ce que le comparateur (V) est suivi d'une unité d'évaluation (AW) comportant deux basculeurs monostables (MF1, MF2) parallèles, une porte OU (O), un basculeur bistable (FF), un amplificateur (VS) et une lampe-témoin (WL) pour identifier le signal d'impulsions périodique (TT) lorsqu'il n'y a pas d'erreur et le signal d'erreur (F) non périodique lorsqu'il y a une erreur.

## Claims

1. Error-protected incremental position measuring device for measuring the relative position of two mutually displaceable objects, in which the measuring graduation of a scale unit connected to the first object is sensed by a sensing device fixed to the second object to generate mutually phase-displaced binary signals, from which a logical network generates a binary signal which is equal to a selected one of these binary signals at its input for a permitted combination of these binary signals and differs from this selected binary signal for a forbidden combination of these binary signals, characterized in that the sensing device (A) generates firstly a first binary signal (S11) and a second binary signal (S12) with a mutual phase displacement of 135° and furthermore a third binary signal (S21) and a fourth binary signal (S22) with a mutual phase displacement of 45°, a mutual phase displacement of 90° being present between the second binary signal (S12) and the third binary signal (S21), and in that the combined binary signal (S11$^+$) generated by the logical network (LN) in accordance with the logical equation S11$^+$ = S12'S21' + S12'(S11S22 + S11'S22') + S21'(S11S22' + S11'S22) and the selected binary signal (S11) are adapted to be fed to a comparator (V).

2. Measuring device according to claim 1, characterized in that the sensing device (A) comprises two sensing units (AE1, AE2) independent from one another, each with its own illuminating unit (B1, B2) and in that the first sensing unit (AE1) generates the first binary signal (S11) as well as the second binary signal (S12) and the second sensing unit (AE2) generates the third binary signal (S21) as well as the fourth binary signal (S22).

3. Measuring device according to claim 1, characterized in that the binary signals S11, S12, S21, S22 are present at the inputs of the logical network (LN) and the combined binary signal (S11$^+$) arises at the output of the logical network (LN).

4. Measuring device according to claim 3, characterized in that the first binary signal (S11) and the fourth binary signal (S22) act on the inputs of an exclusive—OR gate EO, whose output is connected for the one to the second input of a first NAND gate (N1) and for the other through a first inverter (11) to the second input of a second NAND gate (N2), in that the first input of the first NAND gate is responsive to the third binary signal (S21) and the first input of the second NAND gate (N2) to the second binary signal (S12), in that the outputs of the first NAND gate (N1) and the second NAND gate (N2) act on the inputs of a third NAND gate (N3) and in that the output of the third NAND gate (N3) is connected to the input of a second inverter (I2), at whose output the combined binary signal (S11$^+$) results.

5. Measuring device according to claim 1, characterized in that the comparator (V) has, as well as the inputs for the first binary signal (S11) and the combined binary signal (S11$^+$), a third input for a periodic clock signal (TT) of a pulse generator (TG) and in that the periodic clock signal (TT) appears at the output of the comparator (V) in the error-free case and an aperiodic error signal (F) appears in the error case.

6. Measuring device according to claim 5, characterized in that the first binary signal (S11) at the first input of the comparator (V) acts on the first input of a fourth NAND gate (N4) through a third inverter (I3) and the periodic clock signal (TT) at the third input of the comparator (V) acts on the second input of the fourth NAND gate (N4) through a fourth inverter (I4), in that the periodic clock signal (TT) and the combined binary signal (S11$^+$) at the second input of the comparator (V) additionally act on the first input and the second input respectively of a fifth NAND gate (N5) and in that the outputs of the fourth NAND gate (N4) and the fifth NAND gate (N5) are connected to the inputs of a sixth NAND gate (N6), whose output forms the output of the comparator (V).

7. Measuring device according to claim 1, characterized in that the comparator (V) is followed by a processing unit (AW) with two parallel monostable flip-flops (MF1, MF2), an OR gate (O), a bistable flip-flop (FF), an amplifier (VS) and a warning lamp (WL) for detecting the periodic clock signal (TT) in the error-free case and the aperiodic error signal F in the error case.

Fig. 1

01

A

KS

AE1    AE2
L1     L2
B1     B2
K1     K2
MT     MT     M
AP1    AP2
P11  P12  P21  P22
TS11   TS22
TS12  TS21
S11  S12  S21  S22

02

Fig. 2

T11
T12         TG1
MT          X
T21
T22         TG2

M

Fig. 3

AT 11
AP 1
AT 12

AT 21
AP 2
AT 22

## _Fig. 4_

S 11
S 12
S 21
S 22

s

## _Fig. 5_

S 21
S 11
S 22
S 12

N 1
I 1
N 2
N 3
I 2
E0
S 11 +

ZA

LN

I 3
N 4
N 6
S 11
TT
I 4
TG
N 5
S 11 +

F; TT
MF 1
MF 2
O
FF
VS
WL

V
AW